# EUROPÄISCHE PATENTSCHRIFT

(11) **EP 0 347 730 B1**
(45) Veröffentlichungstag und Bekanntmachung des Hinweises auf die Patenterteilung: **09.02.1994**
(21) Anmeldenummer: 89110741.9
(22) Anmeldetag: 14.06.1989
(51) Int. Cl.: H04R 1/02, H04R 9/06, H04N 5/64

(54) **Passive Lautsprecherbox für einen Fernsehempfänger**
Passive loudspeaker box for a television receiver
Haut-parleur passif pour un récepteur de télévision

(30) Priorität: 23.06.1988 DE 3821166
(43) Veröffentlichungstag der Anmeldung: 27.12.1989
(73) Patentinhaber: DEUTSCHE THOMSON-BRANDT GMBH, 78048 Villingen-Schwenningen (DE)
(72) Erfinder: Thiele, Karl-Heinz, Dipl.-Phys., D-3150 Peine (DE)
(74) Vertreter: Einsel, Robert, Dipl.-Ing.

(56) Entgegenhaltungen:
- DE-A- 3 028 065
- DE-A- 3 447 745
- GB-A- 2 102 243
- GB-A- 2 119 202
- JOURNAL OF THE AUDIO ENGINEERING SOCIETY, Band 35, Nr. 1,2, Januar-Februar 1987, Seiten 24-30, New York, NY, US; P.A. REGALIA et al.: "Active RC crossover networks with adjustable characteristics"
- PATENT ABSTRACTS OF JAPAN, Band 12, Nr. 256 (E-635)[3103], 19. Juli 1988 & JP-A-63 43 498

## Beschreibung

In einem Fernsehempfänger ist es bekannt, innerhalb des Gehäuses links und rechts der Bildröhre je eine Lautsprecherbox für die Tonwiedergabe einzubauen. Eine derartige Lautsprecherbox bewirkt magnetische Streufelder, insbesondere statische Streufelder durch die Magneten der Lautsprecher und dynamische Streufelder durch Induktivitäten von im Signalweg liegenden Frequenzweichen zur Aufteilung des Frequenzbandes auf mehrere Lautsprecher. Derartige magnetische Streufelder können in der Bildröhre und in ihrer Beschaltung Störungen in Form von Farbreinheitsfehlern oder veränderlichen Schattenwirkungen verursachen. Diese Störungen bestehen z.B. in sichtbaren Strukturen, die sich im Takte des von den Lautsprechern wiedergegebenen Tones über den Bildschirm bewegen. Auch sonstige Metallteile der Lautsprecherbox wie z.B. Befestigungsmittel, Metall-Lautsprecherkorb, Membranen aus Aluminium und dgl. können das in der Bildröhre wirksame Magnetfeld beeinflussen und dadurch zu Bildfehlern bei der Wiedergabe führen. Diese Beeinflussung der Bildwidergabe durch magnetische Streufelder ist besonders gravierend bei neuartigen Bildröhren mit einer Bildschirmdiagonale von 33 Zoll.

Es ist bekannt, magnetische Störfelder durch Abschirmungen in Form eines Weicheisengehäuses oder Mu-Metall unwirksam zu machen. Diese Lösung ist jedoch relativ teuer und insbesondere in einem Farbfernsehempfänger aus Kosten- und Gewichtsgründen nicht einsetzbar.

Der Einfluß des magnetischen Streufeldes auf die Bildröhre läßt sich auch durch einen größeren Abstand zwischen der Lautsprecherbox und der Bildröhre verringern. Diese Lösung ist aber auch nicht praktikabel, weil die Box innerhalb des Gehäuses angeordnet ist und die Abmessungen des Gehäuses begrenzt sind.

Der Erfindung liegt die Aufgabe zugrunde, einerseits den Einfluß von Streufeldern durch Magnete und Induktivitäten auf das Magnetfeld der Bildröhre und andererseits die Beeinflussung des Bildröhrenfeldes durch Metallteile der Lautsprecherbox die Befestigungsmittel, Korb und Membran zu verringern.

Diese Aufgabe wird durch die im Anspruch 1 angegebene Erfindung gelöst. Vorteilhafte Weiterbildungen der Erfindung sind in den Unteransprüchen beschrieben.

Die Erfindung beruht auf folgenden Erkenntnissen und Überlegungen: Für die meisten Metall enthaltenden Bauteile einer Box, die die genannte Störung in der Bildröhre bewirken, gibt es gleichwertige Alternativlösungen, die magnetisch unwirksam sind und keine Beeinträchtigung der Bildwiedergabe bewirken. Wenn alle Möglichkeiten dieser Alternativlösungen ausgeschöpft werden, als Metallteil in der Box im wesentlichen nur noch der Lautsprechermagnet verbleibt und dieser noch mit einer magnetischen Abschirmung versehen wird, können die magnetischen Störfelder in der Bildröhre derart beherrscht werden, daß die beschriebenen Störungen bei der Bildwiedergabe nicht mehr auftreten. Durch eine gezielte Anwendung und Kombination mehrerer, für sich allein bekannter Maßnahmen kann also ohne nennenswerten Mehraufwand und ohne Beeinträchtigung der Funktion der Lautsprecherbox die genannte Aufgabe gelöst werden.

Das Gehäuse der Box, das vorzugsweise der Form der Bildröhre angepaßt ist, kann ohne Verwendung von Metallteilen aus den einzelnen Gehäuseteilen zusammengesetzt werden, z.B. durch eine Klebverbindung oder eine formschlüssige Rasterverbindung, ein sogenanntes Snap-In. Eine solche Lösung ist beschrieben in der älteren Patentanmeldung DE-A-37 06 158.5, publiziert am 29.9.1988, und ebenfalls in der Anmeldung GB-A-2 119 202.

Die störende Wirkung des unvermeidbaren Permanentmagneten des Lautsprechers kann durch eine den Magneten topfartig umgebende Abschirmung aus einem Weicheisengehäuse oder Mu-Metall beherrscht werden. Ein derartiger Lautsprecher mit einer Abschirmung für den Magneten ist z.B. beschrieben in dem DE-GM 17 16 352.

Alle übrigen Teile des Lautsprechers können ohne Verwendung von ferromagnetischen Metallteilen ausgebildet sein. Insbesondere bestehen der Lautsprecherkorb und die Membran aus Kunststoff. Die Befestigung des Lautsprechers an einer Gehäusewand der Box erfolgt vorzugsweise ebenfalls ohne Verwendung von Metallteilen durch eine formschlüssige Rastverbindung gemäß dem DE-GM 84 02 128 oder der DE-OS 35 12 896. Das von dem Luftspalt des Lautsprechers ausgehende magnetische Streufeld kann durch Anwendung eines Magnetofluides innerhalb des Luftspaltes beträchtlich verringert werden. Diese Lösung ist näher beschrieben in der DE-OS 30 28 065.

Bei einer Mehrwegebox sind frequenzselektive Filter erforderlich, um das gesamte NF-Frequenzband auf verschiedene Lautsprecher, z.B. einen Tieftöner, einen Mitteltöner und einen Hochtöner, aufzuteilen. Derartige elektrische Filter mit Kondensatoren und Induktivitäten können durch konstruktive Maßnahmen an dem Lautsprecher ersetzt werden. Es ist möglich, durch eine besondere Konstruktion der Membran und der Zentriermembran oder durch eine besondere Kupplung und Verbindung zwischen diesen Teilen eine Tiefpaßwirkung für den Lautsprecher zu erzielen. Auch durch andere Maßnahmen wie z.B. eine besondere Aufhängung der Membran oder zusätzliche Dämpfungsmittel in Weg des Schallfeldes vor dem Lautsprecher kann für den Lautsprecher ein bestimmter Frequenzgang erzielt werden. Derartige konstruktive Lösungen am Lautsprecher zur Erzielung eines bestimmten Frequenzganges sind näher beschrieben in den DE-OS 33 34 442, 34 47 745, 36 41 760.

Es hat sich darüberhinaus gezeigt, daß durch den Wegfall von Induktivitäten im Weg des NF-Signals, die zwangsläufig eine Tiefpaßwirkung für den Strom haben, das Einschwingverhalten des Lautsprechers verbessert wird. Darüberhinaus wird der Wirkungsgrad solcher Lautsprecher vergrößert.

Bei üblichen Tiefpässen von Lautsprechern, die aus Induktivitäten in Serienschaltung mit der Schwingspule bestehen, wird ein Frequenzabfall für höhere Frequenzen erzielt. Durch Verwendung von 4-lagigen Schwingspulen (üblich sind 2 Lagen) wird die Tiefpaßdrossel praktisch in das Innere der Schwingspule transferiert.

Die Erfindung wird anhand der Zeichnung an einem Ausführungsbeispiel erläutert. Darin zeigen
- Fig. 1: im Schnitt den Lautsprecher, das Gehäuse und das hintere Gehäuseteil und
- Fig. 2: eine Ansicht der offenen Seite des hinteren Gehäuseteils.

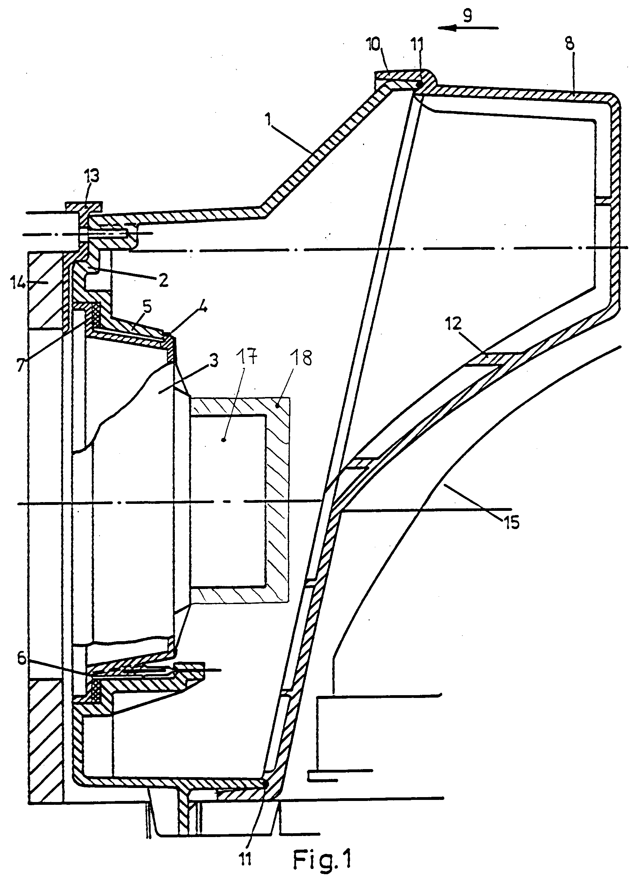

In Fig. 1 enthält die Lautsprecherbox ein Gehäuse 1. In die Vorderwand 2 des Gehäuses 1 ist von vorne, also von links, der Lautsprecher 3 eingesetzt und über einer Rastverbindung 4 an der Vorderwand 2 formschlüssig gehaltert. Die Rastverbindung 4 ist dadurch gebildet, daß federnde Nasen 5 an der Vorderwand 2 hinter starre Kanten am Lautsprecherkorb einrasten. Der Lautsprecher 3 enthält den Permanentmagneten 17, der das einzige Metallteil der Box darstellt und von einer topfförmigen magnetischen Abschirmung 18 umgeben ist. Der luftdichte Abschluß zwischen dem vorderen Flansch 6 des Lautsprechers 3 und der Vorderwand 2 ist durch eine eingelegte Dichtung 7 z.B. aus Gummi gebildet. Auf das hintere Ende des Gehäuses 1 ist das Gehäuseteil 8 in Richtung 9 aufgesetzt und durch eine Vielzahl von über den Umfang verteilten formschlüssigen Rastverbindungen 10 an dem Gehäuse 1 formschlüssig gehaltert. Der luftdichte Abschluß wird dabei durch die eingelegte Dichtung 11 zwischen dem Gehäuse 1 und dem hinteren Gehäuseteil 8 gebildet. Das hintere Gehäuseteil 8 ist mit einer Vielzahl von Rippen 12 versehen, die zur Versteifung und zusätzlich durch vielfache Reflexionen zur Erzeugung eines diffusen Schallfeldes und damit zur Vermeidung stehender Wellen dienen. An seiner Vorderseite ist das Gehäuse 1 unter Zwischenlage eines Gitters 13 an der Seitenwand 14 eines Fernsehempfängergehäuses befestigt.

Die äußere Form des hinteren Gehäuseteils 8 ist der Form der in dem Fernsehempfänger vorgesehenen Bildröhre 15 angepaßt. Dadurch ergibt sich eine optimale Ausnutzung des in einem Fernsehempfänger zwischen der Seitenwand 14 und der Bildröhre 15 vorhandenen, relativ engen Raumes.

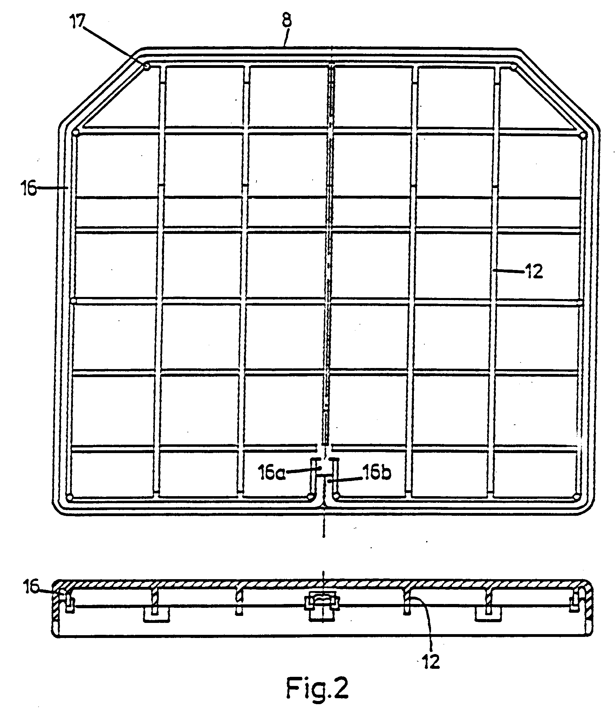

Fig. 2 zeigt eine Ansicht auf die offene Seite des Gehäuseteils 8 allein. Das Gehäuseteil 8 ist an seiner Innenseite mit einer Vielzahl von Rippen 12 versehen, die ein mosaikartiges Feld mit durch Rippen begrenzten Flächen bilden. Die Rippen 12 dienen einerseits zur Versteifung des Gehäuseteils 8 und andererseits in der beschriebenen Weise zur Förderung eines diffusen Schallfeldes im Inneren der Box und zur Vermeidung von stehenden Wellen. An ihrer umlaufenden Kante enthält das Gehäuseteil 8 eine umlaufende Nut 16, in die die Dichtung 11, z.B. in Form eines runden Gummikeders, manuell eingelegt wird. Die Dichtung 11 ist aus Kostengründen nicht als geschlossener Ring ausgebildet, sondern als Meterware mit zwei Enden. Um zu vermeiden, daß an den Stellen der beiden Enden der luftdichte Abschluß unterbrochen ist, enthält die umlaufende Nut 16 zwei kurze Bereiche 16a und 16b, die unmittelbar nebeneinander liegen. Dadurch liegen die beiden Enden der eingelegten Dichtung 11 in den Abschnitten 16a, 16b unmittelbar nebeneinander und bewirken nach dem Zusammensetzen der Teile 1, 8 einen durchgehenden luftdichten Abschluß wie eine ringförmige, endlose Dichtung. An dem umlaufenden Rand der Nut 16 sind Zapfen 17 vorgesehen. Diese dienen dazu, die in die Nut 16 einzulegende Dichtung 11 beim manuellen Einlegen zu führen und das Einlegen der Dichtung 11 zu erleichtern.

Für alle beschriebenen Einzelteile und für den luftdichten Zusammenbau der Teile zu der Box werden keine Metallteile verwendet.

## Patentansprüche

1. Passive Mehrwege-Lautsprecherbox für einen Fernsehempfänger, **gekennzeichnet dadurch** die Kombination folgender Merkmale :
a) Die Box enthält an Metallteilen im wesentlichen nur den mit einer Abschirmung (18) für das magnetische Streufeld versehenden Lautsprechermagneten (17), während der Lautsprecherkorb (3) und die Membran aus Kunststoff bestehen.
b) Die Gehäuseteile (1, 8) bestehen aus Kunststoff und sind ohne Verwendung von Metallteilen über eine formschlüssige Rastverbindung (10, 11) oder eine Klebverbindung zusammengesetzt.
c) Die Filter für die Aufteilung des Frequenzbandes auf mehrere Lautsprecher sind durch mechanische Maßnahmen an den Lautsprechern realisiert.

2. Box nach Anspruch 1, **dadurch gekennzeichnet**, daß die Filterwirkung durch eine besondere Konstruktion oder Kupplung von Membran und Zentriermembran erreicht ist.

3. Box nach Anspruch 1, **dadurch gekennzeichnet**, daß zur Verringerung des Luftspaltstreufeldes im Luftspalt ein Magnetofluid angeordnet ist.

4. Box nach Anspruch 1, **dadurch gekennzeichnet**, daß der Lautsprecher (3) an einer Gehäusewand der Box (1) über eine formschlüssige Rastverbindung (4) befestigt ist.

5. Box nach Anspruch 1, **dadurch gekennzeichnet**, daß ein luftdichter Abschluß der Box einerseits durch einen oder mehrere Lautsprecher (3) und andererseits durch ein hinteres Gehäuseteil (8) gebildet ist, die je unter Verwendung einer Dichtung (7, 11) über eine formschlüssige Rastverbindung (4, 10) auf das Gehäuse (1) aufgesetzt sind.

6. Box nach Anspruch 1, **dadurch gekennzeichnet**, daß gegenüberliegende Wände des Gehäuses (1) oder eines Gehäuseteils (8) nicht parallel zueinander liegen und durch innen liegende Rippen (12) stabilisiert sind.

7. Box nach Anspruch 1, **dadurch gekennzeichnet**, daß die Form des Gehäuses (1) und/oder des Gehäuseteils der Form des Konusteils der Bildröhre (15) in einem Fernsehempfänger angepaßt ist.

## Claims

1. Passive multi-way loudspeaker enclosure for a television receiver, characterised by the combination of the following features:
a) As regards metal parts, the enclosure contains substantially only the loudspeaker magnets (17) provided with a screen (18) for the stray magnetic field while the loudspeaker basket and the diaphragm consist of synthetic material.
b) The housing sections (1, 8) consist of synthetic material and are held together, without the use of metal parts, by an interlocking latching coupling (10, 11) or an adhesive joint.
c) The filters for the distribution of the frequency band over a plurality of loudspeakers are realized by mechanical measures on the loudspeakers.

2. Enclosure in accordance with Claim 1, characterised in that, the filter effect is achieved by means of a special construction or coupling of diaphragm and centring diaphragm.

3. Enclosure in accordance with Claim 1, characterised in that, a magnet fluid is arranged in the air gap for reducing the stray field of the air gap.

4. Enclosure in accordance with Claim 1, characterised in that, the loudspeaker (3) is secured on a housing wall of the enclosure (1) by means of an interlocking latching coupling (4).

5. Enclosure in accordance with Claim 1, characterised in that, an airtight closure of the enclosure is formed on the one hand by one or more loudspeakers (3) and on the other hand by a rear housing section (8) which are each mounted on the housing (1) by means of an interlocking latching coupling (4, 10) using a sealing means (7, 11).

6. Enclosure in accordance with Claim 1, characterised in that, opposite walls of the housing (1) or of a housing section (8) are not parallel to one another and are stabilised by inner located ribs (12).

7. Enclosure in accordance with Claim 1, characterised in that, the shape of the housing (1) and/or of the housing section is matched to the shape of the conical part of the picture tube (15) in a television receiver.

## Revendications

1. Enceinte de haut-parleur passive à plusieurs voies pour un récepteur de télévision, **caractérisée par** la combinaison des caractéristiques suivantes :
a) L'enceinte ne contient comme pièces métalliques essentiellement que l'aimant du haut-parleur (17) qui doit être équipé d'un blindage (18) pour le champ de dispersion magnétique, tandis que le saladier du haut-parleur (3) et la membrane sont en matière synthétique.
b) Les pièces du bâti (1, 8) sont en matière synthétique et sont assemblées sans utilisation de pièces métalliques par un assemblage claboté à crans (10, 11) ou par un assemblage collé.
c) Les filtres pour la répartition de la bande de fréquences sur plusieurs haut-parleurs sont réalisés par des mesures mécaniques sur les haut-parleurs.

2. Enceinte selon la revendication 1, **caractérisée en ce** que l'effet de filtre est obtenu par une construction particulière ou un accouplement particulier de la membrane et de la membrane de centrage.

3. Enceinte selon la revendication 1, **caractérisée en ce** qu'un fluide magnétique est placé dans l'entrefer pour réduire le champ de dispersion de l'entrefer.

4. Enceinte selon la revendication 1, **caractérisée en ce** que le haut-parleur (3) est fixé à une paroi du bâti de l'enceinte (1) par un assemblage claboté à crans (4).

5. Enceinte selon la revendication 1, **caractérisée en ce** qu'une fermeture étanche à l'air de l'enceinte est formée d'une part par un ou plusieurs haut-parleurs (3) et d'autre part par une partie arrière de bâti (8) qui sont rapportés sur le bâti (1) par l'intermédiaire d'un assemblage claboté à crans (4, 10) en utilisant une étanchéité (7, 11) à chaque fois.

6. Enceinte selon la revendication 1, **caractérisée en ce** que des parois opposées du bâti (1) ou d'une partie de bâti (8) ne sont pas parallèles l'une à l'autre et sont stabilisées par des nervures (12) situées à l'intérieur.

7. Enceinte selon la revendication 1, **caractérisée en ce** que la forme du bâti (1) et/ou de la partie de bâti est adaptée à la forme de la partie conique du tube image (15) d'un récepteur de télévision.
